Europäisches Patentamt

European Patent Office

Office européen des brevets

(11) Publication number: 0 401 599 A2

# EUROPEAN PATENT APPLICATION

(21) Application number: 90109790.7

(22) Date of filing: 23.05.90

(51) Int. Cl.5: G01J 3/443, G01J 3/42, G01N 21/35, G01J 5/00, G01N 21/47

(30) Priority: 05.06.89 US 361062

(43) Date of publication of application:
12.12.90 Bulletin 90/50

(84) Designated Contracting States:
AT BE CH DE ES FR GB IT LI LU NL

(71) Applicant: MOBAY CORPORATION
Mobay Road
Pittsburgh Pennsylvania 15205(US)

(72) Inventor: Sandridge, Robert L.

Box 65, Rt. 1
Proctor West Virginia 26055(US)
Inventor: Hunt, Robert N.
R.D. No.2, Box 161
Wheeling West Virginia 26003(US)

(74) Representative: Müller, Heinz-Gerd, Dipl.-Ing.
et al
BAYER AG Konzernverwaltung RP
Patentabteilung
D-5090 Leverkusen 1, Bayerwerk(DE)

(54) Remote sensing gas analyzer.

(57) A method and apparatus are described for monitoring an area or areas for the presence of gaseous materials, particularly pollutants, by collecting and analyzing infrared radiation present in the selected area, wherein the apparatus contains a computer controlled platform which positions a reflective surface in azimuth and elevation to direct said radiation into an interferometer for analysis. The results of the spectrometric analyses are made available in a form understandable to the person or device monitoring the area for the presence of specified materials. The results of the spectrometric analysis may, for example, be displayed on a video unit, printed or used to sound an alarm.

FIG.1

## REMOTE SENSING GAS ANALYZER

### BACKGROUND OF THE INVENTION

The present invention relates to a method for monitoring on a continuous basis a selected area for gaseous materials present in the atmosphere of that selected area and to apparatus useful therefor.

In production facilities, particularly chemical production facilities, potentially hazardous materials are often employed. To reduce the risk of production, handling and use of such materials, detection of the presence of their vapors in the atmosphere before dangerous levels are reached is desirable. Continuous monitoring of the atmosphere of the production or handling facilities is one way to ensure early detection of undesirable materials in the atmosphere.

Many approaches for monitoring the atmosphere for the presence of pollutants have been explored. U.S. 3,766,380 and U.S. 3,925,666, for example, disclose methods in which an infrared laser beam is transmitted through the atmosphere. The reflections of this transmitted laser beam are collected and analyzed for information relating to the presence of gaseous pollutants. In each of these disclosed methods, the wavelength of the transmitted laser beam must be chosen to detect a specific gaseous pollutant. Consequently, a second different pollutant could be detected on the same device and discriminated from the first pollutant only if a laser beam having a wavelength different from that used to detect the first pollutant were used. It would not therefore be possible to continuously monitor the atmosphere for several hazardous materials with a single device by the process disclosed in these two patents. In fact, continuous monitoring for more than one pollutant would be possible only by using as many devices as there are gaseous pollutants possible in the monitored area.

U.S. Patents 4,490,043 and 4,529,317 each disclose a method for monitoring gaseous pollutants in which multiple transmitted laser beams are employed. In U.S. 4,490,043, two laser beams at different frequencies are employed. One beam has a wavelength specific to the gas or gases being monitored and the other beam is a reference beam at a nearby wavelength which does not have absorption bands from the pollutant or other compounds. This method is limited to detection of a specific pollutant or pollutants whose presence in the environment is expected. Further, this method requires variation of the amount of radiation reaching the detector in order to prevent overload to the detector when the beam scans areas of high reflectivity, thus limiting the quantitative capabilities of the device. Furthermore, this method gives only the direction of the gas and not the distance of a gas cloud or concentration of the gaseous material.

In the monitoring method disclosed in U.S. 4,529,317, at least two scanning beams, each containing multi-plexed reference and measuring wavelengths are directed towards the location to be monitored from two spaced-apart scanning positions. Combination of information from the two signals provides a measure of the amount of gas at the intersection of the two beams. As in the method disclosed in U.S. 4,490,043, the reference beam wavelength is selected on the basis of the particular pollutant expected to be present in the environment. Continuous monitoring for the presence of more than one pollutant can not therefore be accomplished with a single device.

In each of the above-described systems and any other infrared laser-based systems, only a limited number of discrete wavelengths can be generated by the laser and used for measuring and reference beams. The available wavelengths may not however be well matched to the absorption peaks of interest. Consequently, lower sensitivity of the system and increased likelihood of interference from other pollutants results. In addition, since only one measuring wavelength is normally considered, any other compound which absorbs at the selected frequency would give a signal which would be indistinguishable from the signals given by the pollutant of interest. Interference in the measurement of the pollutant being monitored would result.

The Environmental Protection Agency has pursued methods for monitoring the atmosphere for gaseous pollutants which would not be limited to detection of only one compound at a time. A brief history of the Environmental Protection Agency's attempts to use remote optical sensing of emissions (ROSE) systems in which commercial Fourier Transform Infrared Spectrophotometers are used is given by Herget et al in "Remote Fourier Transform Infrared Air Pollution Studies," Optical Engineering, Volume 19, No. 4, pages 508-514 (July/August 1980). Herget et al also describes an improved mobile ROSE system in this article. Actual tests conducted with this improved mobile system are described in Herget's "Remote and Cross-stack Measurement of Stack Gas Concentrations Using a Mobile FI-IR System" in Applied Optics, Vol. 21, No. 4, pages 635-641 (February 15, 1982).

One of the EPA's first ROSE systems was a mobile system designed to detect and measure pollutants present at various pollution sources from a point remote from the pollution source. In this system, interferograms collected in the field were returned to a central computer for processing. This delay between data collection and data processing was undesirable because it made it difficult, if not impossible, to detect a leak before it had spread and created a potentially hazardous condition. This early system was subsequently improved to permit on-site processing.

Herget et al reports that these ROSE systems were subsequently further modified to include an interferometer system capable of detecting wavelengths in the infrared spectral region of from 650 to 6000 cm$^{-1}$. This ROSE system could be transported in a van-sized vehicle to a location near the area to be monitored. In this most recent ROSE system, a light source and a source telescope are first positioned at a site remote from the site to be monitored. Energy from this remote light source is collected by a receiver telescope through an opening in the van wall. A tracking mirror reflects the infrared signal of gas(es) emitted from a stack of the facility being monitored into the receiving telescope. The receiving telescope focuses energy from the remote light source and the infrared signal of the gas(es) at the interferometer aperture. The interferometer detector which has a dual element sandwich-type configuration mounted in a liquid nitrogen Dewar scans two infrared regions (i.e. 1800 to 6000 cm$^{-1}$ and 600 to 1800 cm$^{-1}$) separately. Selection of the desired detector element is made by command (via computer). Two beamsplitters are employed in the interferometer. A beamsplitter interchange and realignment takes about five minutes.

This ROSE system has several practical disadvantages. For example, this system employs a stationary source light and source telescope which are positioned in a manner such that the source light is reflected off of the tracking mirror to the receiver telescope. Movement of the tracking mirror to monitor a second nearby site thus necessitates movement of the source light and source telescope if an accurate measurement is to be obtained. This ROSE system is therefore incapable of monitoring more than one site by simply adjusting the tracking mirror. Nor can such system be modified in a simple manner to permit monitoring of several different locations within a few minutes. In fact, Herget et al states that after the initial setup of the ROSE system (which takes two to three hours), subsequent setups in the same vicinity require about one hour under normal conditions.

This ROSE system is also incapable of giving precise readings on pollutants which are not in line with or which have already crossed the optical path defined by the remote light source.

Further, pollutants which do not exhibit characteristic infrared peaks in the range of the selected beamsplitter (i.e. either 650-1800 cm$^{-1}$ or 1800 to 6000 cm$^{-1}$) can not be identified without a beamsplitter interchange and realignment. Such interchange and realignment, however, take about five minutes. Consequently, if two pollutants were present in a monitored area simultaneously and one of those pollutants had a characteristic IR band at 1700 cm$^{-1}$ and the other had a characteristic band at 1900 cm$^{-1}$, the ROSE system could not detect and monitor both pollutants simultaneously.

Yet another disadvantage of the ROSE system is the initial set up time of two to three hours. The length of time required for set up makes the ROSE system almost useless for detecting a leak in its early stages unless the system is permanently installed at the location of the leak or a leak happens to occur during the scheduled monitoring of an area.

Finally, the primary mirrors of the ROSE System are not suitable for continuous exposure to corrosive industrial atmospheres.

Another improved system for monitoring gaseous pollutants is presently being marketed by Bomem Corporation. Detailed information with respect to the construction and operation of this Bomem system are not yet available to Applicants. However, it is apparent from advertising literature for this system that the optical components used in this system and the design of the instrument would not withstand the corrosive atmospheres encountered in many industrial environments.

The US Army has also announced that it is working on a tripod mounted sensor device capable of detecting chemical vapors at distances of up to five kilometers. Specific details about the structure of this device have not, however, been released.

U.S. Patent 4,795,253 discloses a remote gas analyzer capable of monitoring an area for the presence of gaseous materials in which background radiation is collected by large mirrors, analyzed with a spectrometer and the results of the analysis are displayed or recorded.

## SUMMARY OF THE INVENTION

It is an object of the present invention to provide a method and apparatus for continuously monitoring an area for the purpose of detecting one or more gaseous materials in the atmosphere of that area.

It is also an object of the present invention to provide a method and apparatus for continuously monitoring the atmosphere of a selected area for the presence of any gaseous materials (particularly hazardous vapors) having suitable absorption or emission peaks in the infrared region.

It is yet another object of the present invention to provide a lightweight, relatively portable apparatus capable of detecting the amount of any infrared absorbing or emitting gaseous material in the atmosphere of a selected area and displaying the results on a monitor or recorder.

It is a further object of the present invention to provide a method and apparatus capable of detecting the amount and/or presence of any infrared absorbing or emitting material in the atmosphere of a selected area, displaying a significant portion of the infrared spectrum of the radiation coming from the area, and if desired, providing a permanent record of the results, either as a computer file or as a plotter-generated infrared spectrum.

It is a further object of the present invention to provide a method and apparatus capable of detecting the location and limits of a gas cloud of any infrared absorbing or emitting material in a selected area and displaying such information in a form understandable to a monitor or human observer.

It is also an object of the present invention to provide an apparatus capable of detecting the amount and/or presence of any infrared absorbing or emitting material in the atmosphere in which the design and construction of the device is particularly suitable for continuous, automatic, low maintenance, unattended operation in severe industrial environments over extended periods of time.

It is a further object of the present invention to provide a method and apparatus capable of automatically controlling, in either or both azimuth and elevation, the primary energy-collecting or directing mirror to sequentially view any number of preselected areas to be monitored.

It is a further object of the present invention to provide a method and apparatus to control scanning, in either or both azimuth and elevation, by means of programmable computerized servo mechanisms which aim the radiation collection device at any selected point or area within the viewing limits of the instrument.

These and other objects which will be apparent to those skilled in the art are accomplished by using a device which includes a computer-controlled servo mechanism to direct the aiming of a primary energy collecting or directing mirror of a suitable spectrometer (such as a Fourier Transform Infrared (FTIR) Spectrometer). The primary mirror is used to collect infrared radiation from preselected points or areas. The infrared radiation collected is analyzed and the results of this analysis are made available in a form understandable to the person or device monitoring the area for the presence of gaseous materials having suitable infrared absorption patterns. The results of the spectrometric analysis may, for example, be displayed on a monitor. It is also possible to connect the device of the present invention to an alarm system which is activated when predetermined levels of a specified material are detected.

In a preferred embodiment, the primary radiation collecting or directing device is mounted on a computer controlled platform capable of being rotated around two perpendicular axes. The energy from the primary radiation collecting or directing device is analyzed for spectral content to determine the presence of infrared absorbing (or emitting) gasses and the results presented in a manner understandable to a human observer, or suitable for recording, alarming or controlling requirements.

Apparatus useful in the practice of this invention must include (a) a radiation collecting or directing device capable of collecting and/or directing infrared radiation, (b) a computer-controlled platform for aiming the infrared collection or directing device, (c) an interferometer capable of analyzing infrared radiation within a predetermined range of wavelengths collected by the collection or directing device (a) and (d) means for communicating the results of the interferometer analysis to a monitoring device, an observer, or recording device.

Such apparatus generally include an energy-collecting mirror having a corrosion resistant surface, optics suitable for collimating and directing the collected energy into a spectrometer, an interferometer of the Michaelson-Morely type, a cooled high-sensitivity infrared detector, suitable electronic means for providing high signal-to-noise characteristics, and means for data reduction and data storage such as a computer.

## BRIEF DESCRIPTION OF THE DRAWINGS

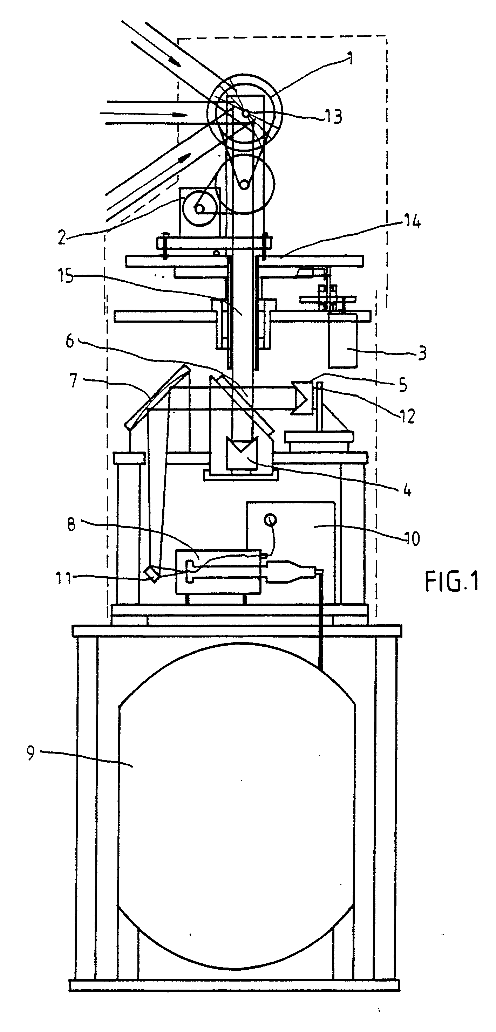

Figure 1 is a schematic representation of one embodiment of the inventive apparatus in which the radiation collecting device may be moved vertically and/or horizontally by a computer controlled platform.

## DETAILED DESCRIPTION OF THE INVENTION

The present invention relates to a method for detecting the presence and/or quantity of an infrared absorbing or emitting gaseous material present in the atmosphere of a selected location and to apparatus useful in such detection.

Background radiation is emitted by any object which is at a temperature above absolute zero. A gas present between such an object and a detection device may produce either an emission or an absorption spectrum depending upon the temperature of that gas in relation to the background object or objects. Specifically, if the background object is at a temperature lower than that of the gas, the gas will produce an emission spectrum. Conversely, if the background object is at a temperature higher than that of the gas, the gas will produce an absorption spectrum. If, however, the background object is at the exact same temperature as the gas to be detected, no spectrum is obtainable. The likelihood that the temperature of a background object and the temperature of a gas present in the atmosphere will not differ by at least several tenths of a degree is however extremely remote. A spectrum may therefore be obtained in virtually any environment at a temperature greater than absolute zero.

In principle, it is possible to determine the relative concentration of a particular material in a specific area from the emission or absorption spectrum generated by that material. The precision of such determination is however dependent upon factors such as the particular apparatus employed, the temperature difference between the background object(s) and the particular gaseous material(s), the distance between the area being monitored and the spectrometer, the weather, etc. Under optimum conditions, however, the apparatus of the present invention is capable of detecting a gas at a level as low as 1 part per million meter.

One embodiment of an apparatus within the scope of the present invention is illustrated in Figure 1. In the device shown in Figure 1, background infrared radiation and optionally, visible radiation are collected with collection device 1. This collection device 1 is preferably a flat surfaced reflector such as a flat mirror.

A number of reflective coating materials are known and any of them may be used to coat the surface of radiation collecting device 1, provided the coating is sufficiently durable and corrosion resistant. Because the radiation collecting device may be exposed to the atmosphere, it is desirable that it have a protective coating on the mirror surface which makes it possible to clean it and which enhances its corrosion resistance. Any material which reflects infrared and optionally visible radiation very well and which is resistant to tarnish and oxidation is suitable for radiation collection device 1. The reflector should be coated in a manner such that it will have a high degree of surface accuracy. That is, the surface should reflect radiation in a manner such that the reflected radiation does not deviate substantially from its ideal path. For example, when a flat mirror is employed, a surface flatness of 2 microns per inch or better is suitable.

Although a flat surfaced mirror has been used in this collecting device, any reflective surface capable of collecting radiation and of accurately reflecting infrared and optionally visible radiation may be used.

In the device shown in Figure 1, radiation collecting device 1 is mounted on platform 14 to which a computer controlled elevation drive 2 is attached. Elevation drive 2 enables adjustment of the elevation angle of radiation collecting device 1 to any position within its limits. The azimuth position of radiation collecting device 1 is controlled by computer controlled traverse drive 3 which is also attached to platform 13 on which radiation collection device 1 is mounted. Azimuth drive 3 makes it possible to vary the azimuth of collecting device 1 by up to 360 degrees. Both elevation drive 2 and azimuth drive 3 may be driven by a motor such as a DC motor. Each of drives 2 and 3 is independently controlled by a computer (not shown) that is programmed to direct the radiation collecting device 1 to a particular area to be monitored. The timing and sequence of changes in the position of radiation collecting device 1 is controlled by a computer which has been preprogrammed to make the desired changes in the position of drives 2 and 3. The specific details of the time and sequence for position changes of radiation collecting device 1 will depend upon the facility being monitored and the judgment of the monitoring personnel as to the extent of monitoring necessary. It is also possible to program the computer controlling drives 2 and 3 to override the preprogrammed sequence of monitoring in the event unacceptable levels of specified materials are detected in an area being monitored.

The infrared and visible radiation collected by reflecttor 1 are passed through a hollow shaft 15 to beamsplitter 6. This beamsplitter 6 may be made of any material capable of separating collected infrared radiation into two beams. In a preferred embodiment, beamsplitter 6 is a disc made of zinc selenide. Beamsplitter 6 has a diameter which is at least large enough to receive substantially all of the radiation passed from collecting device 1. In the device illustrated in Figure 1, beamsplitter 6 has a diameter corresponding to ~1.5 times the width of the radiation beam passed from collecting device 1. A portion of the infrared radiation passes through beamsplitter 6 onto the surface of a fixed retroreflector 4 (e.g., corner cube mirror) which further reflects that radiation back to the beamsplitter and hence to the surface of off axis parabolic mirror 7. A portion of the collected infrared radiation is also reflected by beamsplitter 6 onto the surface of a moving retroreflector 5 (e.g., corner cube mirror) and then is reflected back through beamsplitter 6 and onto off-axis parabolic mirror 7. Off-axis mirror 7 focuses the recombined beams onto infrared detector 8 via beam steering reflector 11. Infrared detector 8 may be cooled by a system such as the closed cycle cooling system 9 illustrated in Figure 1 or by any other system capable of maintaining the detector at a temperature below ambient temperature. The interferogram signal from detector 8 is transmitted to the infrared detector preamplifier 10. Preamplifier 10 is a low noise electronic amplifier which adjusts the interferogram signal to match the dynamic range of the analog-to-digital converter (not shown) which digitizes the interferogram sent to a computer (not shown) for analysis.

A protective window (not shown) positioned in front of the radiation collection device 1 may be used in this apparatus to protect the reflective surfaces and detector. If used, the window may be made of a material such as a clear polyethylene film. The window need not have any specific diameter, however, it should be large enough to not restrict the field of view of reflector 1. A polyethylene window is preferred because it is transparent in the visible region and has bands in the infrared region which do not interfere with the purpose of the instrument. However, any material which is capable of passing visible light and infrared light in the required regions without a substantial degree of distortion (for example, optical grade zinc selenide plates) may be employed. No specific distance between such a window and radiation collection device 1 is required.

Off-axis parabolic reflector 7 is commercially available from Aero Incorporated. Reflector 7 is a diamond turned parabolic mirror with a rhodium plated surface which presents a circular cross-section when viewed along the optical axis from beamsplitter 6. Steering reflector 11 is a flat, front surfaced mirror with a protected aluminum coating.

The clear aperture of off-axis parabolic reflector 7 was selected so that it would be equal to or greater than the diameter of the optical beams coming from retroreflectors 4 and 5. In the apparatus of Figure 1, an off-axis parabolic mirror having a 3" clear aperture was selected. In principle, however, any reflectors with diameters (widths) which are capable of receiving and reflecting enough infrared radiation for a spectrometric analysis without substantial distortion may be used.

It would also be possible to substitute an infrared transmitting lens with a focal length of from about 1 to about 200 cm for the off axis parabolic reflector 7 shown in Figure 1.

The beamsplitter 6 used in this apparatus was a zinc selenide beamsplitter having a diameter of 3 inches. However, any of the known commercially available beamsplitters having an appropriate diameter and the ability to split infrared radiation may be used. In Figure 1, a flat plate beam splitter arranged at an angle of 45° was used. Any angle which allows separation of the incident beam from reflector 1 into reflected and transmitted components of approximately equal intensities could, however, be used advantageously.

A portion of the beam of infrared radiation is reflected by beamsplitter 6 to retroreflector 5 which is a corner cube retroreflector. Retroreflector 5 reflects that beam back through the beamsplitter 6 to the off-axis parabolic reflector 7. Simultaneously, a second portion of the infrared beam is transmitted through beamsplitter 6 to retroreflector 4 (also a corner cube retroreflector) which reflects that beam back to the beamsplitter 6 which reflects it to the off-axis parabolic reflector 7. Each of retroreflectors 4 and 5 is of hollow-corner cube construction of three coated optical flat plates assembled into a mutually orthogonal corner. The retroreflectors used in the device have an aluminum mirror coating with a silicon oxide protective overcoat, an aperture of 1.5 inches and a 0.5 second of arc accuracy. However, reflectors with any other coating (e.g., gold) which will permit reflection of the infrared radiation without substantial distortion would be suitable. Corner cube retroreflectors are preferred because of the ease with which they may be properly aligned. However, in principle, any reflective surface which would reflect infrared radiation without substantial distortion could be used as retroreflector 4 and/or 5. Because reflective surfaces such as flat plate mirrors are difficult to align properly and improper alignment results in a poor interferogram, use of flat plate mirrors as substitutes for the corner cube retroreflectors is not preferred.

In Figure 1, the retroreflector 5 is mounted on a motor driven moveable stage 12 for generation of the interferogram. The stage could however be mounted on either retroreflector 4 or 5. A constant speed motor and gear train is used to drive the circular cam (not shown) which moves the mirror stage at about 20 rpm. The cam moves the precision roller-bearing stage back and forth in a smooth reciprocating motion through about 1 inch of travel. This arrangement was selected to provide a rugged, trouble-free mechanism for generating the interferogram. Other systems such as constant-velocity, voice-coil driven air bearing stages, may be used but they may not provide equivalent mechanical durability. The distance of travel of the moveable stage may be varied, but that distance must be long enough to obtain the desired degree of spectral resolution. In the instrument shown in Figure 1, one inch of travel in the moveable stage provided better than 1 cm⁻¹ of spectral resolution. The period of reciprocation and distance of stage travel are selected to match the characteristics of the active electronic filters in the detector preamplifier 10. This arrangement allows a high signal-to-noise ratio to be achieved without time-averaging several interferograms or spectra. High resolution spectra may therefore be obtained in a minimum amount of time. For example, spectra can be obtained in less than 3 seconds under typical operating conditions. For simplicity and durability, it is preferred to operate the mirror stage with a fixed period and distance of travel. However, other systems which vary the velocity and travel under controlled conditions may also be used very effectively.

The device illustrated in Figure 1 may optionally include means for detecting mirror movement. For example, mirror movement may be determined by means of a laser (not shown). More specifically, the laser may be used to insert a beam with a characteristic wavelength suitable for determination of the mirror position by means of interference fringe counting techniques. This laser beam is reflected in the same manner as the collected infrared radiation until it passes through beamsplitter 6. A laser detector which picks up the interference pattern from the recombined laser beams and transmits the resulting signal to a laser preamplifier clocks a counting circuit used to trigger the start of data conversion and collection.

The two infrared beams generated by beamsplitter 6 are reflected by the off-axis parabolic reflector 7 to the infrared detector 8 via beamsteering reflector 11. The detector is maintained at an appropriate temperature (e.g. 75-80° K). Any commercially available infrared detector having suitable sensitivity and frequency response may be used. In the apparatus illustrated in Figure 1, a high quality HgCdTe infrared detector mounted in a metal Dewar with a miniature cryostat was used. A silicon diode temperature sensor monitors the cryostat performance. The cryostat is operated with a single stage, closed cycle, helium compressor 9. Temperatures lower than ambient temperature are preferred because the sensitivity of the detector is greater at cooler temperatures (e.g. 75-80° K). Any other suitable cooling device or technique may be used in accordance with the present invention.

The detector 8 used in the apparatus illustrated in Figure 1 was a photoconductive HgCdTe detector capable of detecting infrared radiation in the 8-14 $\mu$m range which range would include at least one characteristic identifying band for substantially all of the gaseous pollutants expected to be found in the monitored area. However, any of the commercially available detectors with the capability of detecting infrared radiation within a desired range could be used. The preferred infrared range of a particular detector will of course be dependent upon the specific environment being monitored. Detectors capable of detecting infrared radiation in virtually any selected region are commercially available.

The interferogram signal from detector 8 is then transmitted to the infrared detector preamplifier 10. Preamplifier 10 is a low noise electronic amplifier with remote gain control to adjust the interferogram signal to match the dynamic range of the analog-to-digital converter (not shown). Active electronic filters are used to reject unwanted frequencies coming from the interferometer and thereby significantly improve the signal-to-noise ratio of the final spectrum. The analog-to-digital converter digitizes the interferogram to be sent to a data reduction device such as a computer (not shown).

Although a computer was used in the apparatus of Figure 1, any device capable of reducing the data received from the infrared detector may be used. Possible alternatives to a computer include optical processors and digital processors.

The computer which was used in the apparatus shown in Figure 1 had been programmed for fast Fourier transform of the collected data but any program which is capable of reducing the collected data to a useful form could be employed. The computer may also be programmed to compare the wavelength of the detected infrared radiation with reference wavelengths of the gases expected to be present in the atmosphere being monitored. However, such comparative programming is not essential to the present invention.

In a particularly preferred embodiment of the present invention, the computer is programmed to analyze selected wavelength regions for the presence of absorption peaks due to compounds of interest. A background spectrum in which the compounds of interest were absent may be used for reference. The peak area of the absorption band (or bands) is obtained by integration and the concentration of the compound determined by calculations based on prior calibration using known concentrations of the gas in question. Other means of analyzing the data can be used without departing from the spirit of the invention, such as comparing absorptions at a reference wavelength with a measuring wavelength, or by use of principal component analysis where interfering gases may be present.

A key feature of the apparatus of the present invention is the mounting of the primary energy gathering reflector 1 to a turret capable of rotating the position of reflector 1 along both the vertical and horizontal axes within a matter of seconds so that radiation from virtually any infrared source located within a radius of 1 kilometer may be collected and evaluated by a single device. This turret makes it possible to scan a 360 degree field of view in the horizontal plane of reflector 1 and a 60 degree field of view in the vertical plane of reflector 1 with a 6 arc second resolution in each plane. Such scanning may be "timed" or controlled by any of the methods known in the art. In the device shown in Figure 1, the areas to be monitored by the apparatus of the present invention may be programmed into a computer. The computer will then direct the turret to move to the next pre-programmed position upon receipt of an appropriate signal.

The apparatus of the present invention makes it possible to scan a wide area of a plant on a continuous basis until a leak is detected, discontinue the continuous scan and concentrate the scanning operation on the area in which the leak has been detected. Where the leak is substantial, training the attention of several scanning devices positioned at strategic locations throughout the plant in this manner makes it possible to both follow the location of the gas cloud and to determine its relative concentration. Such information is essential if measures necessary to neutralize that leak are to be taken before the leak becomes a hazard to plant workers and surrounding communities.

If more than one detector device is employed to monitor a large area e.g., an entire plant, the data from each infrared detector may be transmitted to a central computer directly from the detector or from a smaller computer. Such centralization is particularly useful in cases in which the path of a gas cloud over a large area is to be followed.

It is also possible to incorporate an alarm system into the apparatus of the present invention which alarm system would be activated by a computer whenever a particular pollutant had been detected at a level exceeding a pre-programmed limit. Suitable alarm systems are known in the art and may be readily incorporated into the apparatus of the present invention.

The beamsplitter 6, retroreflectors 4 and 5, the moving stage and drive mechanism for those retroreflectors, infrared detector 8 and infrared detector preamplifier 10 are hereafter collectively referred to as the "interferometer".

It is preferred that the interferometer be mounted below primary mirror 1. The preferred method of mounting is on a rigid optical bench which is attached to the body of the instrument by a three-point shock and vibration damped support 16. This arrangement offers excellent resistance to effects due to ambient temperature changes, vibrations and mechanical stresses. While this is the preferred method of mounting, it is not essential to the present invention and any other means of obtaining a vibration-free, temperature insensitive mounting would be acceptable. The interferometer shown in Figure 1 covers a continuous band of infrared wavelengths between 8 and 14 $\mu$m. However, the band of wavelengths covered by the interferometer may be varied by selection of a beamsplitter 6 and detector 10 having the capability of covering the desired range. Multiple wavelength bands within the capacity of the beamsplitter may be monitored simultaneously by using several detectors, each of which is useful within a range different from that of the others.

The present invention makes it possible to continuously monitor a wide area for the presence of more than one gaseous material with a single interferometer. In fact, the number of gases present in the atmosphere which may be monitored at any given time is limited only by the capacity of the computer and the requirement that at least one identifiable peak of the compound be present within the spectral range of the instrument. Since virtually every composition which would be monitored by a system of the type of the present invention produces at least one characteristic peak or a combination of peaks within the 3-5 or the 8 to 14$\mu$m wavelength range, the above-described monitoring apparatus is capable of detecting a wide variety of substances without the expensive narrow band interference filters for each gas to be detected required in many of the known monitoring systems.

The output of the infrared detector 8 is an interferogram which is processed preferably by a fast Fourier Transform Algorithm in a computer to produce an emission or absorption spectrum. In addition to the processing of the interferogram, the computer may control the mirror scanning, may analyze the spectrum for peaks corresponding to specified (pre-programmed) materials such as toxic gases, may correlate collected data, etc. The result of such analysis may then be printed in a variety of forms and/or projected onto a video display unit.

The invention is further illustrated but is not intended to be limited by the following examples.

## EXAMPLES

### Example 1

An apparatus was assembled from the following components in accordance with the arrangement shown in Figure 1.

Radiation collection mirror 1: a flat mirror measuring 100 mm x 100 mm (sold by Melles Griot) coated with silicon oxide protected aluminum.

Elevation drive 2. Elevation drive motor was manufacturer's part number AS 780D-018 sold by Clifton Precision, Inc.

Traverse drive 3: Traverse Drive Motor was also part AS 780D-018 sold by Clifton Precision, Inc.

Gear trains: were obtained from Stock Drive Products Co.

Beamsplitter 6: ZnSe infrared beamsplitter having a 7.5 cm diameter and sold by Laser Power Optics, Inc.

Reflectors 4 and 5: Corner Cube retroreflectors having a 1.5" aperture which is accurate to 0.5 second of arc sold by Precision Lapping and Optics Co.

Reflector 7: An off-axis parabolic reflector having a 5 cm diameter and sold by Aero Research Associates, Inc.

Infrared Detector 8: A HgCdTe infrared detector sold by E.E.G. Judson under the designation J-15.

Closed cycle cooler 9: A single stage helium cycle compressor Model DC 280 sold by Carlisle Cryotronics, Inc.

Infrared Detector Preamplifier 10: Preamplifier and active filters of a custom design having a band pass of 4-10 kilohertz and remote gain control.

Reflector 11: A 1" x 1" flat front surfaced mirror, part number 2805 sold by Daedal, Inc.

Analog to Digital Converter (not shown): 14 bit analog to digital converter sold by Analog Devices Co. under the designation HAD 1409 KM.

Computer (not shown): A Tandon Plus computer sold by Tandon Corporation.

Moving Mirror Stage 12: A precision roller-bearing stage sold by Automation Gauges Co. under the designation CRK-2.

Laser (not shown): A 0.5 milliwatt HeNe laser sold by Melles Griot Corp.

Laser Detector: A PIN diode part number PD 50PI sold by Sharp Corporation.

Moving Mirror Drive Motor (not shown): Synchronous Motor part number 3005-001 sold by Hurst Corporation.

Approximately 0.1 gm of phosgene was released at an outdoor site of a toluene diisocyanate production facility in which the above-described apparatus was present. A remote infrared source was located approximately 100 meters from the apparatus of the present invention in line with the point of gas release. This apparatus detected the presence of the phosgene and displayed a spectrum of the 8-14 μm infrared region containing absorption peaks characteristic of phosgene in less than 2 seconds.

Example 2

The apparatus used in Example 1 was positioned at an outdoor site aimed in the general direction of plant operating units. No remote infrared source was employed for the test. Approximately 1 gram of dichlorodifluoromethane was released at a distance of 80 meters from the apparatus. The apparatus detected the presence of the chlorofluorocarbon and displayed a spectrum of the 8-14μm infrared region containing three absorption peaks characteristic of dichlorodifluoromethane in less than 2 seconds.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. An apparatus for monitoring the atmosphere of a selected area for the presence of gaseous materials comprising

(a) a reflective surfaced radiation collecting device,

(b) a computer controlled elevation drive connected to collecting device (a),

(c) a computer controlled traverse drive connected to collecting device (a),

(d) an interferometer capable of analyzing infrared radiation within a predetermined range of wavelengths collected by collecting device (a), and

(e) means for communicating the results of the interferometer analysis of the area being monitored.

2. The apparatus of Claim 1 in which the collecting device (a) has a flat reflective surface.

3. The apparatus of Claim 2 in which the flat reflective surfaced collecting device is a flat mirror.

4. The apparatus of Claim 1 in which the elevation drive is capable of changing the elevation of collecting device (a) by up to 60 degrees.

5. The apparatus of Claim 1 in which the traverse drive is capable of rotating collecting device (a) by up to 360 degrees.

6. The apparatus of Claim 1 in which the interferometer is composed of

(i) a beamsplitter capable of splitting infrared radiation within a predetermined range of wavelengths, which beamsplitter is positioned to receive infrared radiation collected by collecting device (a),

(ii) a first retroreflector positioned to receive radiation transmitted by beamsplitter (i),

(iii) a second retroreflector positioned to receive radiation reflected by beamsplitter (i),

(iv) a retroreflector support capable of moving retroreflector (ii) or (iii) in a reciprocating motion,

(v) an off-axis parabolic reflector positioned to receive combined infrared beams coming from the beamsplitter (i), and focus the combined beams onto an infrared detector, and

(vi) an infrared detector positioned to receive infrared radiation from reflector (v).

7. The apparatus of Claim 6 in which radiation collection device (a) is a flat mirror.

8. The apparatus of Claim 6 in which the infrared detector is cooled by a closed cycle cooler.

9. The apparatus of Claim 1 in which the interferometer is composed of

(i) a beamsplitter capable of splitting infrared radiation within a predetermined range of wavelengths which beamsplitter is positioned to receive infrared radiation collected by collecting device (a),

(ii) a first retroreflector positioned to receive radiation transmitted by beamsplitter (i),

(iii) a second retroflector positioned to receive radiation transmitted by beamsplitter (i),

(iv) a retroreflector support capable of moving retroreflector (ii) or (iii) in a reciprocating motion,

(v) an infrared transmitting lens positioned to receive combined infrared beams coming from beamsplitter (i) and to focus the combined beams into an infrared detector and

(vi) an infrared detector positioned to receive infrared radiation from lens (v).

10. The apparatus of Claim 9 in which radiation collection device (a) is a flat mirror.

11. The apparatus of Claim 9 in which the infrared detector is cooled by a closed cycle cooler.

12. A process for monitoring an area for the presence of gaseous materials on a continuous basis comprising

(a) continuously collecting background radiation with a device having a flat reflective surface the vertical and horizontal positions of which are controlled by a computer which is programmed to change the position of the radiation collecting device at predetermined intervals or upon the occurrence of specified events,

(b) analyzing the collected radiation having wavelengths in a selected infrared region with a spectrometer, and

(c) conveying the results of the spectrometric analysis to a device capable of recording or displaying those results.

EP 0 401 599 A2

FIG.1